Europäisches Patentamt

European Patent Office

Office européen des brevets

(11) Publication number: **0 233 732**
**A1**

# EUROPEAN PATENT APPLICATION

(21) Application number: 87300983.1

(22) Date of filing: 04.02.87

(51) Int. Cl.⁴: **C 03 C 3/085**
C 03 C 10/00, C 03 B 8/02

(30) Priority: 13.02.86 US 829376

(43) Date of publication of application:
26.08.87 Bulletin 87/35

(84) Designated Contracting States:
AT BE CH DE FR GB IT LI LU NL SE

(71) Applicant: **Litton Systems, Inc.**
**360 North Crescent Drive**
**Beverly Hills California 90210 (US)**

(72) Inventor: **de Laat, Franz G.A.**
**10505 Melvin Avenue**
**Northridge California 91326 (US)**

**Welsbie, Roland W.**
**2288 Stow Street**
**Simi Valley California 93063 (US)**

(74) Representative: **Rushton, Ronald et al**
**SOMMERVILLE & RUSHTON 11 Holywell Hill**
**St. Albans Hertfordshire AL1 1EZ (GB)**

(54) Lithium-aluminum-silicate glass and glass-ceramic powders and methods of making them.

(57) Lithium-aluminum-silicate glass powders include, by weight, a major amount of silicon dioxide, a substantial amount of aluminum oxide, and minor amounts by weight of the oxides of lithium, titanium, magnesium, zirconium and zinc and, optionally, phosphorous pentoxide. These powders can be formed, by sintering or melting and casting techniques, into glass and glass-ceramic products of a near-net-shape with good transparency to light, low permeability to helium gas, and low thermal expansivity. These powders are made by forming separate mixtures of the reactants in suitable suitable solvents, combining the reactant mixtures, lowering the pH of the resulting mixture with nitric acid, hydrolytically polycondensing the reactants to form a gel, then drying and converting the gel to form a fine, white, glass powder.

EP 0 233 732 A1

**Description**

LITHIUM-ALUMINUM-SILICATE GLASS AND GLASS-CERAMIC POWDERS AND METHODS OF MAKING
THEM

BACKGROUND OF THE INVENTION

1. Field of the Invention
This invention relates to lithium-aluminum-silicate glass powders, glass-ceramics made from such powders and methods for making these glass powders. This invention also relates to formed products made from these powders, as by sintering, melting and casting techniques.

2. Description of Related Art
Methods for making some glass compositions by sol-gel methods are known, as can be seen from such articles as, "Chemical Science's Impact on Future Glass Research," by Donald R. Ulrich, and "Sol-Gel Synthesis of Glasses: Present and Future," by Sumio Sakka, both published in Ceramic Bulletin, Vol. 64, No. 11 (1985).
U. S. Patent 4,432,956 also discloses a sol-gel method for making monolithic silica aerogels for the preparation of silica glass and of heat-insulating expanded materials made from such glass.
None of these references discloses or suggests that any sol-gel method could be used to produce high purity lithium-aluminum-silicate glass by sol-gel techniques. Such glass products have, until now, been made only by conventional high-temperature melting methods. Such glass-making methods commonly cause the undesirable result of adding impurities to the glass products so made. Moreover, such glass products and glass-ceramics made from them must be subjected to time-consuming, costly, cutting, drilling, grinding and polishing or cleaning operations to make precision products from them.

3. Summary of the Invention
The lithium-aluminum-silicate glass powders of this invention can be formed, by sintering and fusion, by melting and solidification, or by other methods, into products of a near-net-shape that exhibit extremely low thermal expansivity and extremely low helium gas permeability. Near-net-shape, as used in the field of powder metals and ceramics technology means a component configuration very close to the final desired geometry. Products of a near-net-shape require little or no costly machining, etching, grinding, boring, polishing, cleaning or other finishing treatments. Since these glass powders and glass-ceramic products made from them by conventional devitrification methods contain virtually no impurities, or at a minimum, substantially smaller quantities of impurities than conventionally-made glasses and glass-ceramics, products made from them can be of good transparency, can have a precise, accurate, predetermined size and shape, and can require minimal cleaning.
In preferred embodiments, the new glass powders and glass-ceramic products contain substantially no measurable quantities of impurities that appear in conventionally-made beta-quartz lithia-alumina-silicate glass and glass-ceramics such as Zerodur and Cervit 142. Such commercially available, conventionally made glass products contain measurable amounts of such impurities as arsenic trioxide, ferric oxide, potassium oxide, calcium oxide and sodium oxide, and lesser, trace amounts of such elements as barium, manganese, tin, lead, gallium, copper, silver, chromium, cobalt and strontium. By contrast, the glass powders made by the processes of this invention contain substantially no measurable amounts of any of these impurities.

4. Detailed Description of the Invention
The glass powders and glass-ceramic products of this invention comprise the following substances, by weight: Silicon dioxide, in major amount; aluminum oxide, in substantial amount; and lesser amounts of the oxides of lithium, titanium, magnesium, zirconium and zinc. These powders can also include phosporus pentoxide, if desired. Preferred embodiments of these glass powders appear in Table I below.
Table I lists, on the extreme left, the reactants for making preferred embodiments of the glass powders of the invention. Columns (1) and (2) show, for Samples A and B, the actual weight of each reactant used

## TABLE I

| PRECURSOR: | (1) SAMPLE A WT. | % | (2) SAMPLE B WT. | % | OXIDE (ELEMENT) | (3) SAMPLE A % | (4) SAMPLE B % |
|---|---|---|---|---|---|---|---|
| Tetraethoxysilane $((C_2H_5O)_4Si)$ | 212.8 | 52.7 | 194.6 | 48.5 | $SiO_2$ (Si) | 61.35(28.68) 56.22 | 56.10(26.22) 51.70 |
| Aluminum S-butoxide $(Al(OC_4H_9)_3)$ | 135.1 | 33.5 | 123.7 | 30.8 | $Al_2O_3$(Al) | 27.97(14.80) 24.41 | 25.60(13.55) 24.79 |
| Lithium 2-4 pentane-dionate $(LiC_5H_7O_2)$ | 29.0 | 7.2 | 26.3 | 6.6 | $Li_2O$ (Li) | 4.09(1.90) 5.08 | 3.70(1.72) 3.37 |
| Titanium isopropoxide $(Ti(OC_3H_7)_4)$ | 8.2 | 2.0 | 8.2 | 2.0 | $TiO_2$ (Ti) | 2.30(1.38) 2.30 | 2.30(1.38) 2.12 |
| Magnesium 2-4pentane-dionate $(MgC_5H_7O_2)$ | 6.4 | 1.6 | 6.4 | 1.6 | MgO (Mg) | 1.00(0.60) 0.78 | 1.00(0.60) 0.88 |
| Zirconium 2-4pentane-dionate $(Zr(O_2C_5H_7)_4)$ | 7.5 | 1.9 | 7.5 | 1.9 | $ZrO_2$ (Zr) | 1.90(1.41) 2.03 | 1.90(1.41) 1.65 |
| Zinc 2-4 pentane-dionate $(Zn(O_2C_5H_7)_2 \cdot H_2O)$ | 4.9 | 1.2 | 4.9 | 1.2 | ZnO (Zn) | 1.40(1.13) 1.34 | 1.40(1.13) 0.72 |
| Tributyl phosphate $((C_4H_9)_3PO_4)$ | – | – | 30.0 | 7.5 | $P_2O_5$ (P) | – | 8.00(3.49) 5.91 |

0 233 732

constituent element in the glass powders made from the reactants listed in columns (1) and (2). Columns (3) and (4) also show (bottom figures) the percentages by weight of each oxide in these glass powders as verified by wet chemistry analysis. These verification percentages do not total 100% because of limitations intrinsic to the verification methods employed, but are reasonably accurate.

By such a well-known method as solid-state fusing by the process of sintering and the methods of melting and casting, the lithium-aluminum-silicate glass powders can be made into glass products, and, by conversion through devitrification, into glass-ceramics having a near-net-shape.

In the method for solid-state fusion by the process of sintering, glass powder is placed in a mold and heated until the powder becomes viscous enough to flow into the desired shape, and then is fused, preferably under pressure, into the finished product.

In the melting and casting processes, the solid glass powder is converted into liquid form, cast into shape, and then cooled in the mold until it solidifies. Glass products so formed can be converted to glass ceramics by known conventional methods of devitrification. In such devitrification, the glass material is transformed with the aid of appropriate thermal treatments into a glass-ceramic by the processes of nucleation and crystallization of the initial glass material.

These products advantageously exhibit low thermal expansivity, meaning small coefficients of expansion, in the range of about $10^{-6}$ to about $10^{-7}$ inch/inch/°C, and low helium gas permeability. Such products can also be made sufficiently transparent to permit a person to see into the product, with unaided eyesight, at least about one inch. These glass and glass-ceramic products otherwise have X-ray diffraction patterns, crystalline-to-amorphous ratios, crystal forms (e.g., beta eucryptite), crystallite sizes and other characteristics substantially the same as beta-quartz aluminum-lithium-silicate-type glass ceramics made by conventional high temperature, melting, glass-making methods. These characteristics can be obtained in the lithium-aluminum-silicate products of this invention without the machining, cutting, grinding, polishing or cleaning operations that are required when glass-ceramics are made from conventional glass-manufacturing techniques at high temperature.

The methods of this invention for making the glass powders and glass-ceramic products from such glass powders comprise the following steps:

(1) forming, at room temperature, a mixture of aluminum S-butoxide, titanium isopropoxide and tetraethoxysilane, with or without tributyl phosphate, in a 2-propanol solvent used in an amount sufficient to dissolve the reactants completely.

(2) separately forming, at room temperature, a mixture of magnesium 2-4 pentanedionate, zirconium 2-4 pentanedionate and zinc 2-4 pentanedionate in a 2-propanol solvent used in an amount sufficient to dissolve the reactants completely.

(3) separately, dissolving lithium 2-4 pentanedionate in methanol at room temperature.

(4) Combining the mixtures formed in steps (1), (2) and (3), at room temperature.

(5) adding, at room temperature, nitric acid to the mixture formed in step (4) until the pH of the mixture is adjusted to a value in the range of about 3 to about 4.

(6) adding water to the low pH mixture formed in step (5) to form a gel from the mixture. Preferably, about 10 parts of water are added to 90 parts of the mixture by first adding one part of water to 90 parts of the solution, stirring for 10 minutes, then adding the remaining 9 parts of water to the same 90 parts solution, and stirring for an additional five minutes. Following the water addition, a gel forms in about 20 to about 30 minutes at 21°C.

(7) drying the gel to form an organic powder.

(8) grinding the organic powder of step (7), as by ball-milling, into a fine powder, and then calcining the glass in several stages, for a time sufficient to form a fine, white, glass powder.

The calcining step comprises heating the light brown ground organic powder slowly to, and then maintaining the temperature at, 150°C for up to two or three hours until the organic powder changes color from light brown to dark brown. Thereafter, the powder is heated slowly to 300°C, and held at that temperature for up to six hours. Thereafter, the temperature is raised again to 400°C, and maintained at that level for six to eight hours as the color of the product lightens. The temperature of the powder is then raised to 500°C, and again maintained for six to eight hours, and finally to 600°C, where the temperature is again maintained for six to eight hours. The resulting fine, white, glass powder is substantially free of organic substances. Throughout the calcining step, the powder is subjected to a current of air to oxidize the carbon that is combined in the organic structures of the product.

The resulting fine white glass powder can be formed, by sintering or by casting, into glass products of a near-net-shape having good transparency, low permeability to helium gas, and low thermal expansivity. Such products include, but are not limited to, complexly- shaped parts for use in various types of precise measuring instruments. These products have good transparency, predetermined, precise accurate shapes including cavities and passageways with precise, accurate shapes, low thermal expansivity and low helium gas permeability.

## Claims

1. A lithium-aluminum-silicate glass comprising, by weight, a major amount of silicon dioxide, a substantial amount of aluminum oxide, and minor amounts of the oxides of lithium, titanium, magnesium, zirconium and zinc, said glass including substantially no impurities.

2. A lithium-aluminum-silicate glass comprising, by weight, a major amount of silicon dioxide, a substantial amount of aluminum oxide, minor amounts of the oxides of lithium, titanium, magnesium, zirconium and zinc, and a minor amount of phosphorous pentoxide, said glass including substantially no impurities.

3. A lithium-aluminum-silicate glass-ceramic composition comprising, by weight, a major amount of silicon dioxide, a substantial amount of aluminum oxide, and minor amounts of the oxides of lithium, titanium, magnesium, zirconium and zinc, said glass-ceramic including substantially no impurities.

4. A lithium-aluminum-silicate glass-ceramic composition comprising, by weight, a major amount of silicon dioxide, a substantial amount of aluminum oxide, and minor amounts of the oxides of lithium, titanium, magnesium, zirconium and zinc, and a minor amount of phosphorous pentoxide, said glass-ceramic including substantially no impurities.

5. The glass-ceramic of claim 3 or claim 4 having low thermal expansivity and low helium gas permeability.

6. A lithium-aluminum-silicate glass product made by sintering or melting and casting from a glass powder comprising, by weight, a major amount of silicon dioxide, a substantial amount of aluminum oxide, and minor amounts of the oxides of lithium, titanium, magnesium, zirconium and zinc, said glass powder having substantially no impurities.

7. A lithium-aluminum-silicate glass product made by sintering or melting and casting from a glass powder comprising, by weight, a major amount of silicon dioxide, a substantial amount of aluminum oxide, minor amounts of the oxides of lithium, titanium, magnesium, zirconium and zinc, and a minor amount of phosphorous pentoxide, said glass powder having substantially no impurities.

8. A lithium-aluminum-silicate glass-ceramic product made by sintering or melting and casting from a glass powder comprising, by weight, a major amount of silicon dioxide, a substantial amount of aluminum oxide, and minor amounts of the oxides of lithium, titanium, magnesium, zirconium and zinc, said glass powder having substantially no impurities.

9. A lithium-aluminum-silicate glass-ceramic product made by sintering or melting and casting from a glass-ceramic comprising a major amount of silicon dioxide, a substantial amount of aluminum oxide, and minor amounts of the oxides of lithium, titanium, magnesium, zirconium and zinc, and a minor amount of phosphorous pentoxide, said glass powder including substantially no impurities.

10. The lithium-aluminum-silicate glass-ceramic product of claim 8 or claim 9 having low thermal expansivity and low helium gas permeability.

11. A lithium-aluminum-silicate glass product made from a glass powder comprising, by weight, a major amount of silicon dioxide, a substantial amount of aluminum oxide, and minor amounts of the oxides of lithium, titanium, magnesium, zirconium and zinc, said glass powder having substantially no impurities.

12. A lithium-aluminum-silicate glass product made from a glass powder comprising, by weight, a major amount of silicon dioxide, a substantial amount of aluminum oxide, minor amounts of the oxides of lithium, titanium, magnesium, zirconium and zinc, and a minor amount of phosphorous pentoxide, said glass powder having substantially no impurities.

13. A lithium-aluminum-silicate glass-ceramic product made from a glass powder comprising, by weight, a major amount of silicon dioxide, a substantial amount of aluminum oxide, and minor amounts of the oxides of lithium, titanium, magnesium, zirconium and zinc, said glass power having substantially no impurities.

14. A lithium-aluminum-silicate glass-ceramic product made from a glass powder comprising, by weight, a major amount of silicon dioxide, a substantial amount of aluminum oxide, minor amounts of the oxides of lithium, titanium, magnesium, zirconium and zinc, and a minor amount of phosphorous pentoxide, said glass powder including substantially no impurities.

15. The lithium-aluminum-silicate glass-ceramic product of claim 13 or claim 14 having low thermal expansivity and low helium gas permeability.

16. A method for making a lithium-aluminum-silicate glass powder comprising the following steps:

(1) forming, at room temperature, a mixture of aluminum S-butoxide, titanium isopropoxide and tetraethoxysilane, with or without tributyl phosphate, in a 2-propanol solvent used in an amount sufficient to dissolve the reactants completely;

(2) separately, forming, at room temperature, a mixture of magnesium 2-4 pentanedionate, zirconium 2-4 pentanedionate and zinc 2-4 pentanedionate in a 2-propanol solvent used in an amount sufficient to dissolve the reactants completely;

(3) separately dissolving lithium 2-4 pentanedionate in methanol at room temperature; and

(4) combining the mixtures formed in steps (1), (2) and (3) at room temperature.

17. The method of claim 16 comprising the further step of adding, at room temperature, nitric acid to the mixture formed in step (4) of claim 16 until the pH of the mixture is adjusted to a value in the range of about 3 to about 4.

18. The method of claim 17 further comprising the further steps of:

(1) adding water to the low pH solution formed in step (5) to form a gel from the mixture; and

(2) drying the gel to form an organic powder.

19. The method of claim 18 further comprising the step of grinding the organic powder formed in the last step of claim 18.

20. A method for making a lithium-aluminum-silicate glass powder comprising the following steps:

(1) forming, at room temperature, a mixture of aluminum S-butoxide, titanium isopropoxide and tetraethoxysilane, with or without tributyl phosphate, in a 2-propanol solvent used in an amount sufficient to dissolve the reactants completely;

(2) separately, forming, at room temperature, a mixture of magnesium 2-4 pentanedionate, zirconium 2-4 pentanedionate and zinc 2-4 pentanedionate in a 2-propanol solvent used in an amount sufficient to dissolve the reactants completely;

(3) separately dissolving lithium 2-4 pentanedionate in methanol at room temperature;

(4) combining the mixtures formed in steps (1), (2) and (3) at room temperature;

(5) adding, at room temperature, nitric acid to the mixture formed in step (4) until the pH of the mixture is adjusted to a value in the range of about 3 to about 4;

(6) adding water to the low pH solution formed in step (5) to form a gel from the mixture;

(7) drying the gel to form an organic powder; and

(8) grinding the organic powder of step (7) into a fine powder, and then calcining the glass in several stages, for a time sufficient to form a fine, white, glass powder.

European Patent
Office

**EUROPEAN SEARCH REPORT**

Application number

| DOCUMENTS CONSIDERED TO BE RELEVANT | EP 87300983.1 |

| Category | Citation of document with indication, where appropriate, of relevant passages | Relevant to claim | CLASSIFICATION OF THE APPLICATION (Int. Cl.4) |
|---|---|---|---|
| X | US - A - 3 380 818 (SMITH)<br>  * Column 1, lines 24-32; column 4, lines 47-62; table 3, example 40 *<br><br>-- | 1,3,5, 6,8,10, 11,13, 15 | C 03 C  3/085<br>C 03 C 10/00<br>C 03 B  8/02 |
| X | US - A - 3 642 504 (PETZOLD et al.)<br>  * Abstract; column 2, line 61 - column 3, line 11 *<br><br>-- | 2,4,5, 7,9,10 | |
| A | GB - A - 1 312 795 (CARL-ZEISS-STIFTUNG)<br>  * Page 2, lines 28-73; page 3, lines 25-38; example 5 *<br><br>---- | 1-16 | |

TECHNICAL FIELDS
SEARCHED (Int. Cl 4)

C 03 C

C 03 B

D 01 F

C 01 B

The present search report has been drawn up for all claims

| Place of search | Date of completion of the search | Examiner |
|---|---|---|
| VIENNA | 07-05-1987 | HAUSWIRTH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82